# EUROPÄISCHE PATENTSCHRIFT

(11) **EP 4 279 435 B1**
(45) Veröffentlichungstag und Bekanntmachung des Hinweises auf die Patenterteilung: **30.10.2024**
(21) Anmeldenummer: 22196372.1
(22) Anmeldetag: 19.09.2022
(51) Int. Cl.: B66C 13/46

(54) **BETRIEBSVERFAHREN FÜR EIN VERLADESYSTEM UND AUTOMATISIERUNGSSYSTEM ZUR STEUERUNG EINES VERLADESYSTEMS**
OPERATING METHOD FOR A LOADING SYSTEM AND AUTOMATION SYSTEM FOR CONTROLLING A LOADING SYSTEM
PROCÉDÉ DE FONCTIONNEMENT D'UN SYSTÈME DE CHARGEMENT ET SYSTÈME D'AUTOMATISATION POUR COMMANDER UN SYSTÈME DE CHARGEMENT

(43) Veröffentlichungstag der Anmeldung: 22.11.2023
(73) Patentinhaber: Siemens Aktiengesellschaft, 80333 München (DE)
(72) Erfinder: Benkert, Johannes, 90763 Fürth (DE); Schaub, Markus, 90522 Oberasbach (DE); Wielens, Bernd, 48683 Ahaus (DE); Zirbs, Janus, 91058 Erlangen (DE); de Carvalho Ferreira, Fabricio, 91056 Erlangen (DE)
(74) Vertreter: Siemens Patent Attorneys

(56) Entgegenhaltungen:
- WO-A1-2014/053703

## Beschreibung

Die Erfindung betrifft ein Betriebsverfahren für ein Verladesystem ausgestaltet zur Verladung oder zur Bewegung einer Last längs eines Weges, bei welchem während des Verladevorgangs zur Vermeidung einer Kollision zwischen der Last und Gegenständen in der Umgebung mittels eines bildgebenden Sensorsystems zyklisch eine Umgebungs-Bilddatei aufgenommen wird.

Auch betrifft die Erfindung ein Automatisierungssystem ausgestaltet zur Steuerung eines Verladesystems für die Verladung oder Bewegung einer Last längs eines Weges, umfassend ein bildgebendes Sensorsystem angeordnet eine Umgebung abzutasten, eine Sensordaten-Recheneinheit ausgestaltet Sensordaten des Sensorsystems zyklisch zu erfassen und eine Umgebungs-Bilddatei zu erstellen und eine auf Fehlersicherheit ausgelegte Steuerungseinheit ausgestaltet zur Steuerung des Verladesystems.

Im Sinne der Erfindung ist unter funktionaler Sicherheit die in der Norm ISO 13849-1 beschriebenen Konzepte und Vorgaben zu verstehen. Die Norm DIN EN ISO 13849-1 "Sicherheit von Maschinen - Sicherheitsbezogene Teile von Steuerungen" macht Vorgaben für die Gestaltung von sicherheitsbezogenen Teilen von Steuerungen.

Kollisionen einer Last eines Kranes, wobei als Last insbesondere ISO-Container angesehen werden, mit der Umgebung bzw. dem Umfeld, wobei hierbei insbesondere Stapel aus ISO-Containern angenommen werden, oder anderen Hindernissen, stellen ein Problem bei manuell gesteuerten Kranen als auch bei automatisch gesteuerten Kranen dar. Kollisionen können Schäden am Kran selbst, an der Last oder an Objekten in der Umgebung bzw. dem Kranumfeld verursachen, aber auch zu Verletzungen und zum Tod von Menschen führen. Kranbetreiber fordern deshalb eine Einrichtung zur Vermeidung und Verhinderung von Kollisionen.

In der WO 2020/221490 A1 ist bereits ein Verfahren zur kollisionsfreien Bewegung einer Last mit einem Kran beschrieben.

Auch ist unter dem Link https://new.siemens.com/global/en/markets/cranes/harborcranes/load-collision-prevention-system.html eine Lösung zur Steuerung von Verladesystemen bekannt. Dabei erfasst ein Sensorknoten die Kranumgebung mit Hilfe von Sensoren (Radar, LIDAR, Ultraschall etc.). Ein Steuerungsknoten ist für die tatsächliche Bewegungsführung des Krans verantwortlich. Der Sensorknoten erstellt aus den Sensordaten zwei- oder dreidimensionale Karten der Kranumgebung. Die Position der Last ermittelt der Sensorknoten entweder durch eigene Messung mit Hilfe seiner Sensoren oder sie wird ihm auf anderem Wege mitgeteilt. Zur Kollisionserkennung berechnet der Sensorknoten kontinuierlich, ob Objekte in der Kranumgebung einen Schutzbereich um die Last herum verletzen. Sobald der Schutzbereich verletzt wird, sendet der Sensorknoten ein Stopp-Signal an den Steuerungsknoten. Der Steuerungsknoten hat die Kontrolle über die Bewegung des Krans und kann nun im Fall einer drohenden Kollision, in Abhängigkeit des Stopp-Signals den Kran anhalten.

Der Steuerungsknoten ist üblicherweise als eine SPS (Speicherprogrammierbare Steuerung) ausgeführt. Der Sensorknoten ist aufgrund der hohen Anforderungen an Speicher- und Rechenleistung für die Verarbeitung der Sensordaten und Speicherung der Karte in der Regel ein Industrie-PC mit einer entsprechenden leistungsstarken Software. Die aktuell verwendete Hardware bei dem Industrie-PC ist nicht nach den geltenden Sicherheitskriterien zertifiziert und der TÜV würde solch eine Anlage als Sicherheitssteuerung nicht zulassen. Die hohen Anforderungen an Speicher- und Rechenleistung ergeben sich durch die hochfrequente, zum Teil dreidimensionale Erfassung der Umgebung.

Es ist Aufgabe der vorliegenden Erfindung ein Betriebsverfahren für ein Verladesystem bereitzustellen, bei welchem es ermöglicht wird, trotz des erhöhten Datenaufkommens auf einer speziell zertifizierten und auf funktionale Fehlersicherheit ausgelegten Steuerung die Kollisionsvermeidung zu implementieren.

Die Aufgabe wird für ein Betriebsverfahren für ein Verladesystem dadurch gelöst, dass eine eine räumliche Gesamtausdehnung der Last beschreibende digitale Last-Bilddatei bereitgestellt wird, mittels eines bildgebenden Sensorsystems zyklisch eine Umgebungs-Bilddatei aufgenommen wird, ein Schutzabstand auf die Daten der Last-Bilddatei aufaddiert wird und damit eine Kollisionsmodell-Bilddatei bereitgestellt wird und eine Ausschnitts-Datei als eine virtuell aufgenommene Bilddatei mit einem Blickwinkel von einer Position der Last in Abhängigkeit des Weges bereitgestellt wird, wobei die Ausschnitts-Datei als eine reduzierte Darstellung aus der Umgebungs-Bilddatei gewonnen wird, eine Differenz-Bilddatei aus der aus der Kollisionsmodell-Bilddatei und der Ausschnitts-Datei durch Differenzbildung bereitgestellt wird, ein Auswerteschritt durchgeführt wird, wobei die Differenz-Bilddatei auf eine mögliche Kollision hin untersucht wird.

Im Sinne der Erfindung wird unter "von einer Position" der Last folgendes verstanden. Die Position könnte ein Ursprung oder Nullpunkt in der Last sein oder ein beliebig gewählter Punkt in oder an der Last. Diese Position muss nicht zwingend im Mittelpunkt liegen, aber es muss sichergestellt sein, dass alle beteiligten Komponenten bzw. Rechenverfahren, dasselbe Verständnis von dieser Position bzw. dem Referenzpunkt haben.

Das vorgestellte Verfahren der Erfindung vermeidet das Problem, dass der Sensorknoten viele Informationen von dem Steuerungsknoten braucht und möglicherweise sogar projektspezifisch angepasst werden muss. Als Lösung wird vorgeschlagen, die Kollisionsberechnung auf dem Steuerungsknoten zu verlagern der Sensorknoten überträgt damit zyklisch seine Sicht der Kranumgebung zum Steuerungsknoten. Aus dieser reduzierten Darstellung der Umgebungsinformationen ist der Steuerungsknoten in der Lage eine Kollisionsberechnung durchzuführen. Die hierfür benötigten Berechnungen könnten somit auch auf einem Safety Controller, insbesondere einen auf funktionale Fehlersicherheit ausgelegten Automatisierungscontroller, durchgeführt werden und wäre damit durch einen TÜV oder anderen Einrichtungen zertifizierbar.

Eine Weiterführung des Verfahrens sieht vor mit den bildgebenden Sensorsystem eine Punktewolke als Umgebungs-Bilddatei aufzunehmen und aus der Punktewolke die Ausschnitts-Datei als ein datenreduziertes erstes Tiefenbild aus der Sicht einer virtuellen Kamera von einer Position der Last in Abhängigkeit des Weges umzurechnen, wobei die Kollisionsmodell-Bilddatei als ein zweites Tiefenbild vorliegt oder in dieses umgerechnet wird.

Demnach hat man aus einer Umgebungs-Bilddatei, welche eine sehr hohe Datenmenge erfordert, ein reduziertes Tiefenbild der Kranumgebung, mit Hilfe einer "virtuellen Kamera" (Ausschnittsalgorithmus) erhalten. Des Weiteren liegt nun ein Tiefenbild der Last inklusive eines Sicherheitsbereiches der Last vor. Die vorliegenden Tiefenbilder lassen sich ohne einen erhöhten Rechenaufwand voneinander subtrahieren. In einem so entstehenden Differenzbild kann man erkennen, ob ein Sicherheitsbereich bzw. Schutzbereich verletzt wird. Bei den Tiefenbildern beschreibt jeder Punkt einen Abstandswert. Dieser Abstandswert ist im einfachsten Fall der Abstand zwischen einer Objektoberfläche und dem Sensor. Das erste Tiefenbild zeigt die Kranumgebung als Abstand zu einer Position der Last oder eines Lastaufnahmemittels und wird dynamisch aktualisiert. Das zweite Tiefenbild kann beispielsweise die Fläche des Schutzbereiches darstellen und bildet damit von der gleichen Position den Schutzbereich um die Last ab. Es ist möglich den Schutzbereich auf Basis von einer gefahrenen Geschwindigkeit dynamisch anzupassen.

Dazu wird eine Hüllfläche in dem zweiten Tiefenbild um den Schutzabstand dynamisch angepasst.

Im Hinblick auf eine verbesserte Reaktionszeit sieht das Verfahren vor, dass die Differenzbildung für die Bereitstellung der Differenz-Bilddatei aus der Kollisionsmodell-Bilddatei und der Ausschnitts-Datei nicht zu Ende geführt wird oder die Subtraktion der Tiefenbilder in einem Fokusbereich startet, denn sobald ein erstes negatives Ergebnis vorliegt, kann eine Kollisionsaussage getroffen werden.

Um eine bestmögliche Reaktionszeit in der Vorhersage einer möglichen Kollision zu erreichen, kann auch eine Differenzbildung in einem Fokusbereich beginnen.

Bei einem negativen Ergebnis ist der Schutzbereich verletzt und der Kran reduziert seine Geschwindigkeit bzw. stoppt. Bezogen auf die Reaktionszeit kann beim ersten negativen Ergebnis eine Reaktion zur Kollisionsvermeidung initiiert werden. Im Hinblick auf eine Sicherheitszertifizierung nach SIL oder PL-Level ist die Kollisionserkennung gemäß diesem Verfahren sehr gut geeignet. Da es sich um eine einfache arithmetische Rechenoperation, nämlich Subtraktion handelt, die sicher und schnell in einem auf funktionale Sicherheit ausgelegten Sicherheitscontroller als zertifizierte Funktion zur Verfügung gestellt werden kann.

Im Hinblick auf die eingangs genannten Knoten wie den Sensorknoten und den Steuerungsknoten, wird das Verfahren mit Vorteil auf einer Sensordaten-Recheneinheit und einer Steuerungseinheit ausgeführt. Die Last-Bilddatei wird bei einer Inbetriebnahme des Verladesystems bereitgestellt, die Sensordaten, welche mittels des bildgebenden Sensorsystems ermittelt werden, werden auf einer Sensordaten-Recheneinheit zyklisch erfasst und als die Umgebungs-Bilddatei gespeichert.

Die Ausschnitts-Datei wird als eine reduzierte Darstellung der Umgebungs-Bilddatei auf der Sensordaten-Recheneinheit oder auf einer weiteren Recheneinheit berechnet, die Umrechnung der Ausschnitts-Datei in das erste Tiefenbild wird auf der Sensordaten-Recheneinheit oder auf der weiteren Recheneinheit durchgeführt und die Differenzbildung aus der Kollisionsmodell-Bilddatei und der Ausschnitts-Datei wird auf einer auf Fehlersicherheit ausgelegten Steuerungseinheit ausgeführt.

Als vorteilhaft wird hier angesehen, dass die Kollisionsberechnung auf den Steuerungsknoten bzw. auf die Steuerungseinheit verlagert wird. Eine Kollisionsberechnung anhand von zweidimensionalen Tiefenbildern kann nun auf dem Steuerungsknoten aufwandsarm durchgeführt werden.

Im Sinne der Erfindung gibt es zwei verbreitete Darstellungsformen für ein Ergebnis der Stereoskopie bzw. der Aufnahme der Bilddateien. Zum einen sind das Punktewolken und zum anderen Tiefenbilder. Ein Tiefenbild ist im Wesentlichen die Darstellung einer Tiefe in einem zweidimensionalen Bild mittels einer Farbkodierung. Dabei wird zumeist eine Graustufendarstellung gewählt, aber auch eine Kodierung ähnlich einer Wärmebildkamera wird hin und wieder verwendet.

Vorzugsweise haben die Tiefenbilder kartesische Koordinaten, die äquidistant abgetastet werden. Durch eine bekannte Nachbarschaft in Tiefenbildern lassen sich viele Auswertungen einfacher durchführen und Operationen der 2D-Verarbeitung anwenden.

Vorteilhafterweise wird als Verladesystem ein Containerkran oder eine Containerbrücke eingesetzt und als Last ein Container oder ein Container inklusive eines Lastaufnahmemittels.

Für das eingangs genannte Automatisierungssystem wird die Aufgabe dadurch gelöst, dass eine eine räumliche Gesamtausdehnung der Last beschreibende digitale Last-Bilddatei in der auf Fehlersicherheit ausgelegten Steuerungseinheit vorhanden ist, die auf Fehlersicherheit ausgelegte Steuerungseinheit einen Kollisionsalgorithmus aufweist, welcher ausgestaltet ist einen Schutzabstand auf die Daten der Last-Bilddatei zu addieren um damit eine Kollisionsmodell-Bilddatei bereitzustellen, die Sensordaten-Recheneinheit ein Projektionsmittel aufweist, welches ausgestaltet ist eine Ausschnitts-Datei als eine virtuell aufgenommene Bilddatei mit einem Blickwinkel von einer Position der Last in Abhängigkeit des Weges bereitzustellen, wobei das Projektionsmittel ausgestaltet ist, die Ausschnitts-Datei als eine reduzierte Darstellung aus der Umgebungs-Bilddatei zu gewinnen, der Kollisionsalgorithmus ist weiterhin ausgestaltet, eine Differenz-Bilddatei aus der Kollisionsmodell-Bilddatei und der Ausschnitts-Datei durch Differenzbildung zu erstellen und es ist ein Auswertemittel vorhanden, welches ausgestaltet ist die Differenz-Bilddatei auf eine mögliche Kollision zu untersuchen.

Um den Rechenaufwand auf einer auf Fehlersicherheit ausgelegten Steuerungseinheit zu minimieren, ist das bildgebende Sensorsystem und die Sensordateneinheit dazu ausgestaltet, eine Punktewolke als Umgebungs-Bilddatei aufzunehmen und weiterhin ist das Projektionsmittel ausgestaltet aus der Punktewolke die Ausschnitts-Datei als ein datenreduziertes erstes Tiefenbild aus der Sicht einer virtuellen Kamera von einer Position der Last in Abhängigkeit des Weges umzurechnen, wobei die Kollisionsmodell-Bilddatei in der auf Fehlersicherheit ausgelegten Steuerungseinheit als ein zweites Tiefenbild vorliegt.

Weiterhin weist die auf Fehlersicherheit ausgelegte Steuerungseinheit ein Anpassmittel auf, welches ausgestaltet ist eine in dem zweiten Tiefenbild durch den Schutzabstand erzeugte Hüllfläche dynamisch anzupassen. Oft ist eine kontinuierliche Anpassung der Sicherheitsbereiche im Betrieb eines Verladesystems erforderlich, da von Anlage zu Anlage unterschiedliche Gestaltung der Anbauteile vorkommen können, und damit kann schnell auf ein neues in Betrieb zu nehmendes System reagiert werden. Auch ist die dynamische Anpassung des Schutzbereiches von der Geschwindigkeit, mit welcher gerade die Last verfahren wird, abhängig, so kann z.B. bei einer hohen Geschwindigkeit der Schutzbereich groß gewählt werden und bei einer geringeren Geschwindigkeit der Schutzbereich kleiner gewählt werden, aber auch externe Störgrößen z.B. eine bekannte Unsicherheit oder ein Rauschen des Sensors können berücksichtigt werden.

Im Hinblick auf eine schnelle Reaktionszeit weist der Kollisionsalgorithmus ein Fokussiermittel auf, welches ausgestaltet ist die Subtraktionen der Tiefenbilder in einem Fokusbereich zu beginnen, um eine bestmöglichere Reaktionszeit bezüglich der Kollision zu bekommen.

So kann eine Differenzbildung für die Bereitstellung der Differenz-Bilddatei aus der Kollisionsmodell-Bilddatei und der Ausschnitts-Datei nicht zwingend zu Ende geführt werden. Denn, wenn die Subtraktion der Tiefenbilder in einem besonders relevanten Fokusbereich startet, kann ein Stopp-Signal ausgegeben werden, sobald die Differenzbildung ein negatives Ergebnis liefert.

Die Zeichnung zeigt ein Ausführungsbeispiel der Erfindung, dabei zeigt
- FIG 1: eine Blockschaltbild-Darstellung eines Automatisierungssystem,
- FIG 2: eine Seitenansicht eines Verladesystems (Kran),
- FIG 3: eine vereinfachte Darstellung der Umgebung mit Containerstapeln und vereinfachte Tiefenbilder aus der Vogelperspektive,
- FIG 4: eine Seitenansicht des Kranes mit einer Last und einem Schutzbereich und
- FIG 5: die gleiche Seitenansicht des Kranes mit einer Last und einem Schutzbereich, welcher verletzt wird.

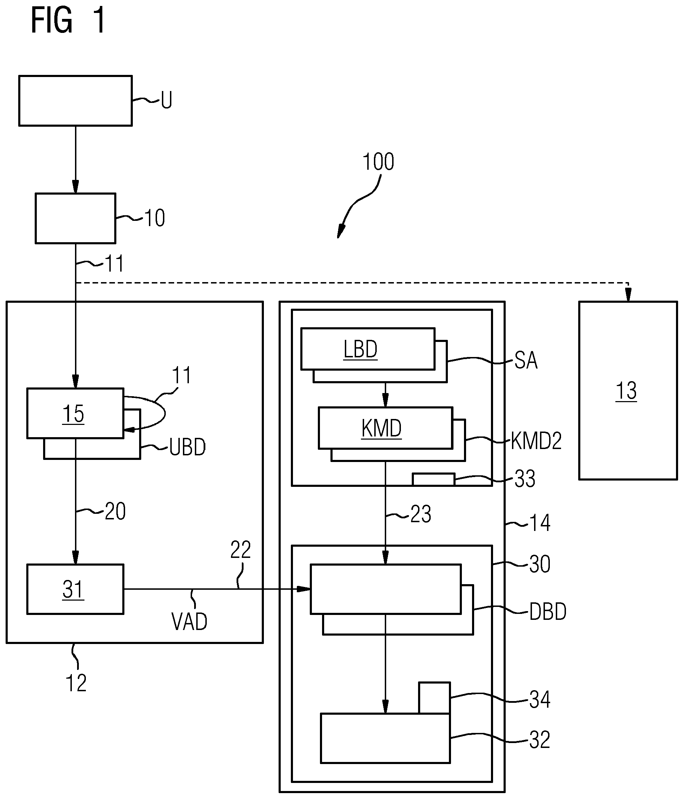

Gemäß FIG 1 ist ein Automatisierungssystem 100 ausgestaltet zur Steuerung eines Verladesystems für die Verladung oder die Bewegung einer Last L längs eines Weges x dargestellt. Das Automatisierungssystem 100 gliedert sich im Wesentlichen in eine Sensordaten-Recheneinheit 12 und eine Steuerungseinheit 14, wobei die Steuerungseinheit 14 eine auf funktionale Sicherheit ausgelegte zertifizierte speicherprogrammierbare Steuerung ist. Nach dem Stand der Technik war es das Problem, dass umfangreiche Datenmengen von Projektionsbildern nur auf einem leistungsstarken Industrie-PC ausgewertet werden konnten. Die Erfindung schlägt nunmehr mit Vorteil vor, dass für eine mögliche Kollisionsberechnung auf der Steuerungseinheit 14 der Steuerungseinheit nur eine Ausschnitts-Datei als eine reduzierte Darstellung aus einer Umgebungs-Bilddatei UBD bereitgestellt wird.

Aus der realen Welt U wird mittels eines bildgebenden Sensorsystems C, beispielsweise LIDAR, eine Punktewolke 20 aus Sensordaten 11 gewonnen. Diese Sensordaten 11 werden als die Punktewolke 20 in einem Speicher 15 der Sensordaten-Recheneinheit 12 zyklisch abgespeichert. Daraus entsteht die Umgebungs-Bilddatei UBD.

Die auf Fehlersicherheit, insbesondere auf funktionale Fehlersicherheit, ausgelegte Steuerungseinheit 14 ist grundsätzlich ausgestaltet zur kompletten Steuerung des Verladesystems. Erfindungsgemäß wird nun auf der Steuerungseinheit 14 auch eine Kollisionsberechnung mittels eines Kollisionsalgorythmuses 30 durchgeführt. Der auf der Steuerungseinheit 14 implementierte Kollisionsalgorithmus 30 ist ausgestaltet, einen Schutzabstand SA auf die Daten der Last-Bilddatei LBD zu addieren und damit eine Kollisionsmodell-Bilddatei KMD bereitzustellen. Für unterschiedliche Anlagen kann die Steuerungseinheit 14 auch weitere Kollisionsmodell-Bilddateien KMD2 aufweisen. Der Kollisionsalgorithmus 30 ist weiterhin ausgestaltet eine Differenz-Bilddatei DBD aus der Kollisionsmodell-Bilddatei KMD und der Ausschnitts-Datei VAD von der Sensordaten-Recheneinheit 12 zu erstellen. Die durch die Differenzbildung gewonnene Differenz-Bilddatei DBD wird mittels eines Auswertemittels 32 auf eine mögliche Kollision der Last L mit der Umgebung U untersucht.

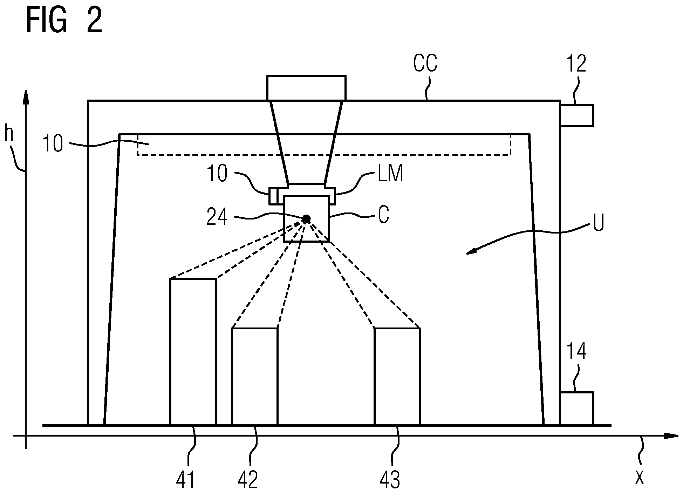

Das bildgebende Sensorsystem 10 und die Sensordaten-Recheneinheit 12 sind dabei ausgestaltet die Punktewolke 20 als Umgebungs-Bilddatei UBD aufzunehmen und weiterhin ist das Projektionsmittel 31 ausgestaltet aus der Punktewolke 20 die Ausschnitts-Datei VAD als ein datenreduziertes erstes Tiefenbild 22 aus der Sicht einer virtuellen Kamera 24 (siehe FIG 2) in Abhängigkeit des Weges x umzurechnen. Die Kollisionsmodell-Bilddatei KMD liegt in der auf Fehlersicherheit ausgelegten Steuerungseinheit 14 als ein zweites Tiefenbild 23 vor.

Die Umrechnung der Sensordaten 11 bzw. der aufgenommenen Punktewolke 20 in ein Tiefenbild 22 muss nicht zwangsläufig in der Sensordaten-Recheneinheit 12 erfolgen, sondern kann auch in einer weiteren ausgelagerten Recheneinheit 13 erfolgen.

Die auf Fehlersicherheit ausgelegte Steuerungseinheit 14 weist weiterhin ein Anpassmittel 33 auf, welches ausgestaltet ist eine in dem zweiten Tiefenbild 23 durch den Schutzabstand SA erzeugte Hüllfläche 26 (siehe FIG 2) dynamisch anzupassen.

Auch weist die auf Fehlersicherheit ausgelegte Steuerungseinheit 14 ein Fokussiermittel 34 auf, welches beispielsweise im Kollisionsalgorithmus 30 eingebettet ist und ausgestaltet ist die Subtraktion des ersten Tiefenbildes 22 und des zweiten Tiefenbildes 23 in einem Fokusbereich 28 zu beginnen, um eine bestmögliche Reaktionszeit bezüglich der Kollision bzw. einer Aussage über eine zukünftige Kollision zu erhalten. Denn sobald ein negatives Ergebnis bei der Subtraktion vorliegt, ist dies ein Anzeichen dafür, dass der Schutzbereich SA verletzt ist oder wird und die Steuerungseinheit 14 kann eine Geschwindigkeitsreduzierung oder ein Stopp-Signal aussenden.

Die FIG 2 zeigt einen Containerkran CC mit einem Container C als Last L, wobei der Container C von einem Lastaufnahmemittel LM gehalten wird. Der Containerkran CC kann eine Last L bzw. den Container C in eine Höhe h längs eines Weges x bewegen. Das bildgebende Sensorsystem 10 ist an den Containerkran CC und an dem Lastaufnahmemittel LM installiert und sorgt für eine Aufnahme der Umgebung U mittels der Umgebungs-Bilddatei UBD. Die Sensordaten 11, welche das bildgebende Sensorsystem 10 liefert, werden an die Sensordaten-Recheneinheit 12 weitergeleitet. Erfindungsgemäß wird nun in der Sensordaten-Recheneinheit 12 nur ein reduziertes Bild der Umgebung an die Steuerungseinheit 14 für eine Kollisionsberechnung weitergeleitet. Denn mittels einer virtuellen Kamera 24, welche eine Sicht aus dem Ursprung des Container C bildet, wird quasi aus der Umgebungs-Bilddatei UBD nur derjenige Ausschnitt längs des Weges benötigt, über welchen sich auch der Container C befindet.

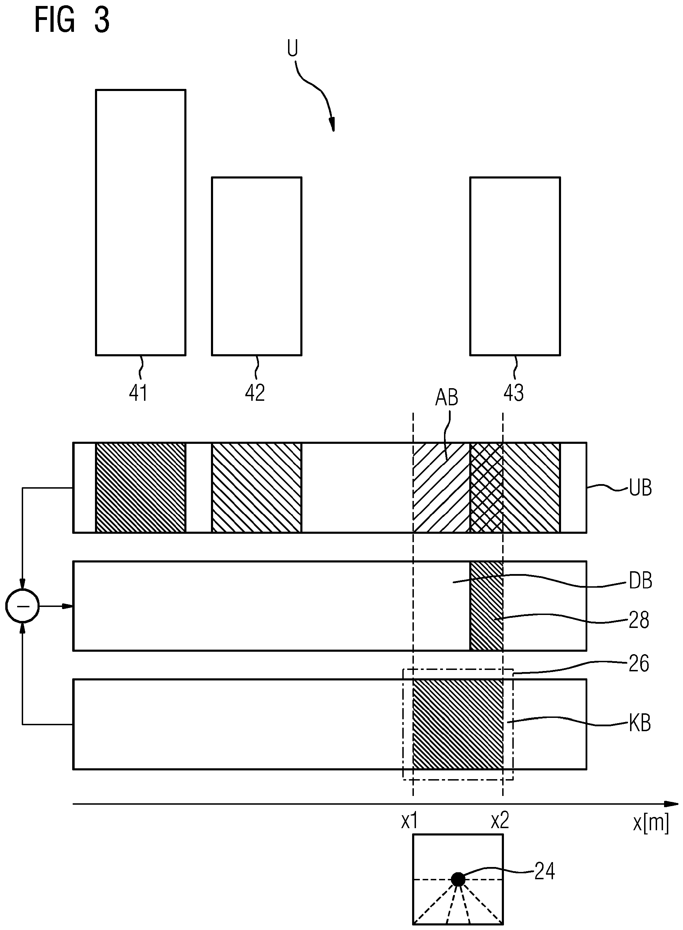

Dazu zeigt die FIG 3 die Erklärung anhand von vereinfachten Tiefenbildern aus einer Vogelperspektive von der Umgebung. In der oberen Hälfte von FIG 3 sind exemplarisch ein erster Containerstapel 41, ein zweiter Containerstapel 42 und ein dritter Containerstapel 43 dargestellt. In der unteren Hälfte von FIG 3 sind die vereinfachten Tiefenbilder als ein Kollisionsbild KB, ein Umgebungsbild UB, ein Ausschnittssbild AB und ein Differenzbild DB dargestellt. Die Darstellung in der Zeichnung ist stark vereinfacht. In der Praxis wird man vermutlich sphärische Tiefenbilder verwenden.

Das Umgebungsbild UB stellt in einer Draufsicht auf die Containerstapel 41,42,43 diese als schwarze bzw. graue Flächen dar. Das Kollisionsbild KB wurde aus der Kollisionsmodell-Bilddatei KMB als ein zweites Tiefenbild 23 generiert. Zu dem zweiten Tiefenbild 23 wurde durch den Schutzabstand SA eine erzeugte Hüllfläche 26 hinzugefügt. Diese Hüllfläche 26 zeigt den Schutzbereich, welcher nicht verletzt werden darf. Das Differenzbild DB gibt bei der Subtraktion des Ausschnittsbildes AB aus dem Umgebungsbild UB und des Kollisionsbild KB ein negatives Ergebnis an, so dass die Steuerungseinheit 14 auswerten kann, dass eine Kollision bevorsteht und dem zufolge die Geschwindigkeit verringern kann oder sogar ein Stopp-Signal sendet.

Wenn man bedenkt, dass insbesondere die Randbereiche der Containerstapel 41,42,43 für eine Kollision gefährlich werden können, könnte ein Fokusbereich 28 in dem die Subtraktion zuerst begonnen wird, in einem Randbereich der Containerstapel 41,42,43 liegen.

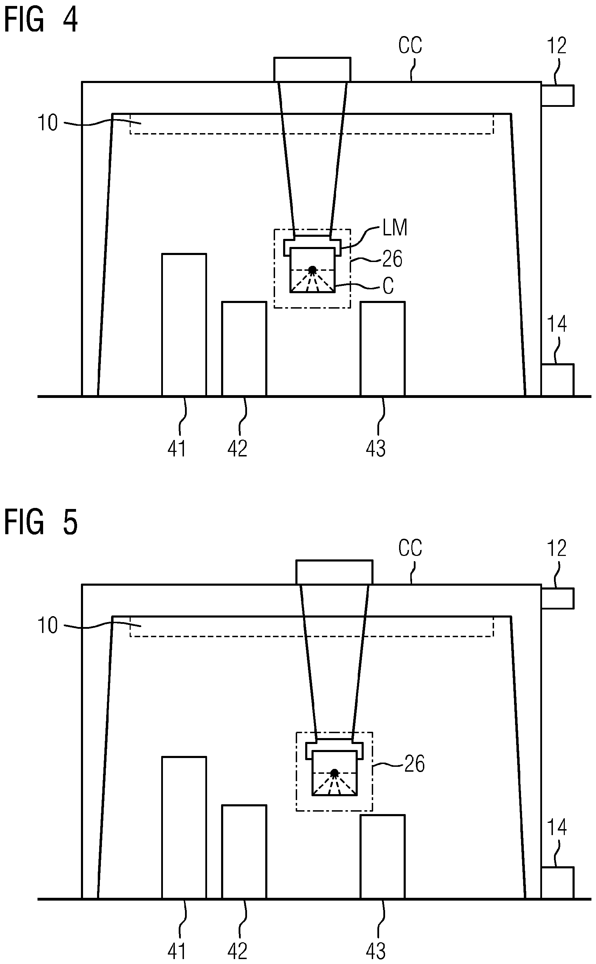

Die FIG 4 zeigt beispielhaft den Containerkran CC, wie er den Container C mit seinem Lastaufnahmemittel LM zwischen dem zweiten Containerstapel 42 und dem dritten Containerstapel 43 platzieren will. Da bei der Differenzbildung in dem Kollisionsalgorithmus 30 anhand der Auswertung der Datenbilder errechnet wird, dass die Hüllfläche 26 nicht berührt wird, kann der Container C bis zu Ende zwischen dem zweiten Containerstapel 42 und dem dritten Containerstapel 43 platziert werden.

Hingegen zeigt die FIG 5 eine Platzierung des Containers C zwischen dem zweiten Containerstapel 42 und dem dritten Containerstapel 43, wobei aber der Container C zu weit zum dritten Containerstapel 43 ausgerichtet ist und bei Weiterverfahren des Containers C mit dem Verladesystem würde gemäß dem Kollisionsalgorithmus 30 aufgezeigt werden, dass die Hüllfläche 26 verletzt wird und daraufhin würde die Steuerungseinheit 14 ein Stopp-Signal aussenden.

## Patentansprüche

1. Betriebsverfahren für ein Verladesystem ausgestaltet zur Verladung oder Bewegung einer Last (L) längs eines Weges (x), bei welchem während des Verladevorgangs zur Vermeidung einer Kollision zwischen der Last (L) und Gegenständen in der Umgebung (U), wobei mittels eines bildgebenden Sensorsystems (10) zyklisch eine Umgebungs-Bilddatei (UBD) aufgenommen wird, **dadurch gekennzeichnet dass**,
- eine eine räumliche Gesamtausdehnung der Last (L) beschreibende digitale Last-Bilddatei (LBD) bereitgestellt wird,
- ein Schutzabstand (SA) auf die Daten der Last-Bilddatei (LBD) aufaddiert wird und damit eine Kollisionsmodell-Bilddatei (KMD) bereitgestellt wird und
- eine Ausschnitts-Datei (VAD) als eine virtuell aufgenommene Bilddatei mit einem Blickwinkel von einer Position der Last (L) in Abhängigkeit des Weges (x) bereitgestellt wird, wobei die Ausschnitts-Datei (VAD) als eine reduzierte Darstellung aus der Umgebungs-Bilddatei (UBD) gewonnen wird,
- eine Differenz-Bilddatei (DBD) aus der Kollisionsmodell-Bilddatei (KMD) und der Ausschnitts-Datei (VAD) durch Differenzbildung bereitgestellt wird,
- ein Auswerteschritt durchgeführt wird, wobei die Differenz-Bilddatei (DBD) auf eine mögliche Kollision hin untersucht wird.

2. Betriebsverfahren nach Anspruch 1, wobei mit dem bildgebenden Sensorsystem (10) eine Punktewolke (20) als Umgebungs-Bilddatei (UBD) aufgenommen wird und aus der Punktewolke (20) die Ausschnitts-Datei (VAD) als ein Daten reduziertes erstes Tiefenbild (22) aus der Sicht einer virtuellen Kamera (24) von einer Position der Last (L) in Abhängigkeit des Weges (x) umgerechnet wird, wobei die Kollisionsmodell-Bilddatei (KMD) als ein zweites Tiefenbild (24) vorliegt oder in dieses umgerechnet wird.

3. Betriebsverfahren nach Anspruch 2, wobei eine in dem zweiten Tiefenbild (23) durch den Schutzabstand (SA) erzeugte Hüllfläche (26) dynamisch anpassbar ist.

4. Betriebsverfahren nach einem der Ansprüche 1 bis 3, wobei die Differenzbildung für die Bereitstellung der Differenz-Bilddatei (DBD) aus der Kollisionsmodell-Bilddatei (KMD) und der Ausschnitts-Datei (VAD) nicht zu Ende geführt wird oder die Subtraktion der Tiefenbilder (22,24) in einem Fokusbereich (28) startet, denn sobald ein erstes negatives Ergebnis vorliegt, kann eine Kollisionsaussage getroffen werden.

5. Betriebsverfahren nach einem der Ansprüche 2 bis 4, wobei
- die Last-Bilddatei (LBD) bei einer Inbetriebnahme des Verladesystems bereitgestellt wird,
- Sensordaten (11), welche mittels des bildgebenden Sensorsystems (10) ermittelt werden, auf einer Sensordaten-Recheneinheit (12) zyklisch erfasst und als die Umgebungs-Bilddatei (UBD) gespeichert werden,
- die Ausschnitts-Datei (VAD) als eine reduzierte Darstellung der Umgebungs-Bilddatei (UBD) auf der Sensordaten-Recheneinheit (12) oder auf einer weiteren Recheneinheit (13) berechnet wird,
- die Umrechnung der Ausschnitts-Datei (VAD) in das erste Tiefenbild (22) auf der Sensordaten-Recheneinheit (12) oder auf einer weiteren Recheneinheit (13) durchgeführt wird,
- die Differenzbildung aus der Kollisionsmodell-Bilddatei (KMD) und der Ausschnitts-Datei (VAD) auf einer auf Fehlersicherheit ausgelegte Steuerungseinheit (14) ausgeführt wird.

6. Betriebsverfahren nach einem der Ansprüche 1 bis 5, wobei als Verladesystem ein Containerkran (CC) oder eine Containerbrücke eingesetzt wird und als Last (L) ein Container (C) oder ein Container (L) inklusive eines Lastaufnahmemittels (LM) eingesetzt wird.

7. Automatisierungssystem (100) ausgestaltet zur Steuerung eines Verladesystems für die Verladung oder Bewegung einer Last (L) längs eines Weges (x), umfassend
- ein bildgebendes Sensorsystem (10) angeordnet eine Umgebung abzutasten,
- eine Sensordaten-Recheneinheit (12) ausgestaltet Sensordaten (11) des Sensorsystems (10) zyklisch zu erfassen und eine Umgebungs-Bilddatei (UBD) zu erstellen,
**dadurch gekennzeichnet, dass**
- eine auf Fehlersicherheit ausgelegte Steuerungseinheit (14) ausgestaltet zur Steuerung des Verladesystems,
- eine räumliche Gesamtausdehnung der Last (L) beschreibende digitale Last-Bilddatei (LBD) in der auf Fehlersicherheit ausgelegten Steuerungseinheit (14) vorhanden ist,
- die auf Fehlersicherheit ausgelegte Steuerungseinheit (14) einen Kollisionsalgorithmus (30) aufweist, welcher ausgestaltet ist einen Schutzabstand (SA) auf die Daten der Last-Bilddatei (LBD) zu addieren und damit eine Kollisionsmodell-Bilddatei (KMD) bereit zu stellen,
- die Sensordaten-Recheneinheit (12) ein Projektionsmittel (31) aufweist, welches ausgestaltet ist eine Ausschnitts-Datei (VAD) als eine virtuell aufgenommene Bilddatei mit einem Blickwinkel von einer Position der Last (L) in Abhängigkeit des Weges (x) bereit zu stellen, wobei das Projektionsmittel (31) ausgestaltet ist die Ausschnitts-Datei (VAD) als eine reduzierte Darstellung aus der Umgebungs-Bilddatei (UBD) zu gewinnen,
- der Kollisionsalgorithmus (30) weiterhin ausgestaltet ist eine Differenz-Bilddatei (DBD) aus der Kollisionsmodell-Bilddatei (KMD) und der Ausschnitts-Datei (VAD) durch Differenzbildung zu erstellen und ein Auswertemittel (32) vorhanden ist, welches ausgestaltet ist die Differenz-Bilddatei (DBD) auf eine mögliche Kollision zu untersuchen.

8. Automatisierungssystem (100) nach Anspruch 7, wobei das bildgebende Sensorsystem (10) und die Sensordaten-Recheneinheit (12) ausgestaltet sind eine Punktewolke (20) als Umgebungs-Bilddatei (UBD) aufzunehmen, weiterhin ist das Projektionsmittel (31) ausgestaltet aus der Punktewolke (20) die Ausschnitts-Datei (VAD) als ein Daten reduziertes erstes Tiefenbild (22) aus der Sicht einer virtuellen Kamera (24) von einer Position der Last (L) in Abhängigkeit des Weges (x) umzurechnen, wobei die Kollisionsmodell-Bilddatei (KMD) in der auf Fehlersicherheit ausgelegten Steuerungseinheit (14) als ein zweites Tiefenbild (24) vorliegt.

9. Automatisierungssystem (100) nach Anspruch 8, wobei die auf Fehlersicherheit ausgelegte Steuerungseinheit (14) ein Anpassmittel (33) aufweist, welches ausgestaltet ist eine in dem zweiten Tiefenbild (23) durch den Schutzabstand (SA) erzeugte Hüllfläche (26) dynamisch anzupassen.

10. Automatisierungssystem (100) nach einem der Ansprüche 7 bis 9, wobei der Kollisionsalgorithmus (30) ein Fokussiermittel (34) aufweist, welches ausgestaltet ist die Subtraktion der Tiefenbilder (22,23) in einem Fokusbereich zu beginnen, um eine bestmögliche Reaktionszeit bezüglich der Kollision zu bekommen.

## Claims

1. Operating method for a loading system designed to load or move a load (L) along a route (x), with which during the loading process for avoiding a collision between the load (L) and objects in the environment (U), wherein an environment image file (UBD) is recorded cyclically by means of an imaging sensor system (10), **characterised in that**
- a digital load image file (LBD) describing a spatial overall extent of the load (L) is provided,
- a protective distance (SA) is added to the data of the load image file (LBD) and a collision model image file (KMB) is thus provided and
- a cutout file (VAD) is provided as a virtually recorded image file with a viewing angle from one position of the load (L) as a function of the route (x), wherein the cutout file (VAD) is obtained as a reduced representation from the environment image file (UBD),
- a differential image file (DBD) is provided from the collision model image file (KMD) and the cutout file (VAD) by means of differentiation,
- an evaluation step is carried out, wherein the differential image file (DBD) is examined for a possible collision.

2. Operating method according to claim 1, wherein with the imaging sensor system (10) a point cloud (20) is recorded as an environment image file (UBD) and from the point cloud (20) the cutout file (VAD) is converted as a data-reduced first depth image (22) from the perspective of a virtual camera (24) from a position of the load (L) as a function of the route (x), wherein the collision model image file (KMD) is present as a second depth image (24) or is converted herein.

3. Operating method according to claim 2, wherein an enveloping surface (26) generated in the second depth image (23) by means of the protective distance (SA) can be adjusted dynamically.

4. Operating method according to one of claims 1 to 3, wherein the differentiation for the provisioning of the differential image file (DBD) from the collision model image file (KMD) and the cutout file (VAD) is not completed or the subtraction of the depth images (22,24) is started in a focus area (28), since as soon as a first negative result exists, a collision statement can be made.

5. Operating method according to one of claims 2 to 4, wherein
- the load image file (LBD) is provided during commissioning of the loading system,
- sensor data (11), which is determined by means of the imaging sensor system (10), is captured cyclically on a sensor data computing unit (12) and stored as the environmental image file (UBD),
- the cutout file (VAD) is calculated as a reduced representation of the environment image file (UBD) on the sensor data computing unit (12) or on a further computing unit (13),
- the conversion of the cutout file (VAD) into the first depth image (22) is carried out on the sensor data computing unit (12) or on a further computing unit (13),
- the differentiation from the collision model image file (KMD) and the cutout file (VAD) is carried out on a control unit (14) designed for fault safety.

6. Operating method according to one of claims 1 to 5, wherein a container crane (CC) or a container bridge is used as a loading system and a container (C) or a container (L) including a load receiving means (LM) is used as a load (L).

7. Automation system (100) designed to control a loading system for loading or moving a load (L) along a route (x) comprising
- an imaging sensor system (10) arranged to scan an environment,
- a sensor data computing unit (12) designed to cyclically capture sensor data (11) of the sensor system (10) and to create an environment image file (UBD),
**characterised in that**
- a control unit (14) configured for fault safety and designed to control the loading system,
- a digital load image file (LBD) describing a spatial overall extent of the load (L) is available in the control unit (14) designed for fault safety,
- the control unit (14) designed for faulty safety has a collision algorithm (30), which is designed to add a protective distance (SA) to the data of the load image file (LBD) and thus to provide a collision model image file (KMD),
- the sensor data computing unit (12) has a projection means (31), which is designed to provide a cutout file (BAD) as a virtually recorded image file with a viewing angle from one position of the load (L) as a function of the route (x), wherein the projection means (31) is designed to obtain the cutout file (VAD) as a reduced representation from the environment image file (UBD),
- the collision algorithm (30) is further designed to create a differential image file (DBD) from the collision model image file (KMD) and the cutout file (VAD) by means of differentiation and an evaluation means (32) is available, which is designed to examine the differential image file (DBD) for a possible collision.

8. Automation system (100) according to claim 7, wherein the imaging sensor system (10) and the sensor data computing unit (12) are designed to record a point cloud (20) as an environment image file (UBD), furthermore the projection means (31) is designed, from the point cloud (20), to convert the cutout file (VAD) as a data-reduced first depth image (22) from the perspective of a virtual camera (24) from a position of the load (L) as a function of the route (x), wherein the collision model image file (KMD) exists in the control unit (14) designed for fault safety as a second depth image (24).

9. Automation system (100) according to claim 8, wherein the control unit (14) designed for fault safety has an adjustment means (33), which is designed to dynamically adjust an enveloping surface (26) generated by the protective distance (SA) in the second depth image (23).

10. Automation system (100) according to one of claims 7 or 9, wherein the collision algorithm (30) has a focusing means (34), which is designed to begin the subtraction of the depth images (22,23) in a focus area in order to obtain a best possible reaction time with respect to the collision.

## Revendications

1. Procédé pour faire fonctionner un système de chargement conformé pour le chargement ou le déplacement d'une charge (L) le long d'un chemin (x), dans lequel pendant l'opération de chargement, on enregistre, pour empêcher une collision de la charge (L) et des objets dans l'environnement (U), cycliquement un fichier (UBD) d'image d'environnement, au moyen d'un système (10) de capteur donnant une image, **caractérisé en ce que** l'
- on se procure un fichier (LBD) d'image de charge numérique décrivant l'étendue d'ensemble dans l'espace de la charge (L),
- on additionne une distance (SA) de protection aux données du fichier (LBD) d'image de la charge et on se procure ainsi un fichier (KMD) d'image de modèle de collision et
- on se procure un fichier (VAD) d'extrait sous la forme d'un fichier d'image enregistré virtuellement avec un angle de vue, depuis une position de la charge (L) en fonction du chemin (x), dans lequel on obtient le fichier (VAD) d'extrait sous la forme d'une représentation réduite à partir du fichier (UBD) d'image d'environnement,
- on se procure, par une formation de différence, un fichier (DBD) d'image de différence, à partir du fichier (KMD) d'image de modèle de collision et du fichier (VAD) d'extrait,
- on effectue un stade d'évaluation, dans lequel on examine le fichier (DBD) d'image de différence en ce qui concerne une possibilité de collision.

2. Procédé suivant la revendication 1, dans lequel, par le système (10) de capteur donnant une image, on enregistre un nuage (20) de points comme fichier (UBD) d'image d'environnement et à partir du nuage (20) de points, on recalcule le fichier (VAD) d'extrait sous la forme d'une première image (22) de disparité réduite en données à partir de la vue d'une caméra (24) virtuelle depuis une position de la charge (L) en fonction du chemin (x), dans lequel le fichier (KMD) d'image de modèle de collision se présente sous la forme d'une deuxième image (24) de disparité ou est recalculé en celle-ci.

3. Procédé suivant la revendication 2, dans lequel une surface (26) enveloppe, produite dans la deuxième image (23) de disparité par la distance (SA) de protection, peut être adaptée dynamiquement.

4. Procédé suivant l'une des revendications 1 à 3, dans lequel on ne conduit pas jusqu'à la fin la formation de différence pour la mise à disposition du fichier (DBD) d'image de différence à partir du fichier (KMD) d'image de modèle de collision et du fichier (VAD) d'extrait où on fait commencer la soustraction des images (22, 24) de disparité dans une partie (28) de foyer, car dès qu'un premier résultat négatif est présent, une assertion de collision peut être prise.

5. Procédé suivant l'une des revendications 2 à 4, dans lequel
- on se procure le fichier (LBD) d'image de charge lors d'une mise en fonctionnement du système de chargement,
- on saisit cycliquement, sur une unité (12) informatique de données de capteur, des données (11) de capteur, qui sont déterminés au moyen du système (10) de capteur donnant une image et on les met en mémoire sous la forme du fichier (UBD) d'image d'environnement,
- on calcule sur l'unité (12) informatique de données de capteur ou sur une autre unité (13) informatique le fichier (VAD) d'extrait sous la forme d'une représentation réduite du fichier (UBD) d'image d'environnement,
- on effectue le recalcul du fichier (VAD) d'extrait en la première image (22) de disparité sur l'unité (12) informatique de données de capteur ou sur une autre unité (13) informatique,
- on exécute l'information de différence à partir du fichier (KMD) d'image de modèle de collision et du fichier (VAD) d'extrait sur une unité (14) de commande conçue de manière sécurisée à l'erreur.

6. Procédé suivant l'une des revendications 1 à 5, dans lequel on utilise comme système de chargement une grue (CC) pour conteneur ou un pont pour conteneur et on utilise comme charge (L) un conteneur (C) ou un conteneur (L) y compris un moyen (LM) de prise de charge.

7. Système (100) d'automatisation conformé pour la commande d'un système de chargement pour le chargement ou le déplacement d'une charge (L) le long d'un chemin (x), comprenant
- un système (10) de capteur donnant une image, monté de manière à échantillonner un environnement,
- une unité (12) informatique de données de capteur conformée pour saisir cycliquement des données (11) de capteur du système (10) de capteur et établir un fichier (UBD) d'image d'environnement, **caractérisé en ce que**
- une unité (14) de commande conçue d'une manière sécurisée à l'erreur est conformée pour la commande du système de chargement,
- il y a, dans l'unité (14) de commande conçue de manière sécurisée à l'erreur, un fichier (LBD) d'image de charge numérique décrivant l'étendue d'ensemble dans l'espace de la charge (L),
- l'unité (14) de commande, conçue de manière sécurisée à l'erreur, comporte un algorithme (30) de collision, qui est conformé pour ajouter une distance (SA) de protection aux données du fichier (LBD) d'image de charge et disposer ainsi d'un fichier (KMD) d'image de modèle de collision,
- l'unité (12) informatique de données de capteur comporte un moyen (31) de projection, qui est conformé pour disposer d'un fichier (VAD) d'extrait sous la forme d'un fichier d'image enregistré virtuellement avec un angle de vue depuis une position de la charge (L) en fonction du chemin (x), dans lequel le moyen (31) de projection est conformé pour obtenir le fichier (VAD) d'extrait sous la forme d'une représentation réduite à partir du fichier (UBD) d'image de l'environnement,
- l'algorithme (30) de collision est conformé en outre pour établir un fichier (DBD) d'image de différence, à partir du fichier (KMD) d'image de modèle de collision et du fichier (VAD) d'extrait par formation d'une différence et il y a un moyen (32) d'évaluation, qui est conformé pour examiner le fichier (DBD) d'image de différence en ce qui concerne une possibilité de collision.

8. Système (100) d'automatisation suivant la revendication 7, dans lequel le système (10) capteur donnant une image et l'unité (12) informatique de données de capteur sont conformés pour enregistrer un nuage (20) de points comme fichier (UBD) d'image de l'environnement, le moyen (31) de projection est conformé en outre pour recalculer à partir du nuage (20) de points le fichier (VAD) d'extrait sous la forme d'une première image (22) de disparité réduite en données, à partir de la vue d'une caméra (24) virtuelle depuis une position de la charge (L) en fonction du chemin (x), dans lequel le fichier (KMD) d'image de modèle de collision est présent sous la forme d'une deuxième image (24) de disparité dans l'unité (14) de commande conçue de manière sécurisée à l'erreur.

9. Système (100) d'automatisation suivant la revendication 8, dans lequel l'unité (14) de commande conçue d'une manière sécurisée à l'erreur a un moyen (33) d'adaptation, qui est conformé pour adapter dynamiquement une surface (26) enveloppe produite par la distance (SA) de protection dans la deuxième image (23) de disparité.

10. Système (100) d'automatisation suivant l'une des revendications 7 à 9, dans lequel l'algorithme (30) de collision comporte un moyen (34) de focalisation, qui est conformé pour faire commencer la soustraction des images (22, 23) de disparité dans une partie de foyer, afin d'obtenir un temps de réaction le meilleur possible en ce qui concerne la collision.
